Europäisches Patentamt

European Patent Office

Office européen des brevets

(11) Veröffentlichungsnummer: **0 313 128 B1**

(12) **EUROPÄISCHE PATENTSCHRIFT**

(45) Veröffentlichungstag der Patentschrift: **22.04.92**

(21) Anmeldenummer: **88202190.0**

(22) Anmeldetag: **04.10.88**

(51) Int. Cl.⁵: $\text{G01M}$ **11/00**

(54) **Messanordnung zur Prüfung einer Mehrzahl von Lichtwellenleitern.**

(30) Priorität: **20.10.87 DE 3735399**

(43) Veröffentlichungstag der Anmeldung:
**26.04.89 Patentblatt  89/17**

(45) Bekanntmachung des Hinweises auf die
Patenterteilung:
**22.04.92 Patentblatt  92/17**

(84) Benannte Vertragsstaaten:
**DE FR GB IT SE**

(56) Entgegenhaltungen:
**EP-A- 0 179 183**
**EP-A- 0 198 480**
**DE-A- 2 846 852**
**DE-A- 3 439 905**

**OPTICAL CHANNEL SELECTOR MN**
**936A/MN937A, Juni 1986, Japan,Anritsu Corp.**
**Cat.No. 936/937-1**

(73) Patentinhaber: **Philips Patentverwaltung**
**GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfa-**
**brieken**
**Groenewoudseweg 1**
**NL-5621 BA Eindhoven(NL)**

(84) Benannte Vertragsstaaten:
**FR GB IT SE**

(72) Erfinder: **Hemmann, Rainer, Dr.**
**Rispenweg 18**
**W-5000 Köln 41(DE)**
Erfinder: **Riech, Volker, Dr.**
**Gustav-Radbruch-Strasse 4**
**W-5090 Leverkusen 3(DE)**

(74) Vertreter: **Koch, Ingo, Dr.-Ing. et al**
**Philips Patentverwaltung GmbH Wenden-**
**strasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Meßanordnung zur Prüfung einer Mehrzahl von Lichtwellenleitern (LWL) mittels eines optischen Meßgerätes, auf dessen optischen Meßeingang über einen optischen Wahlschalter aufeinanderfolgend jeweils einer der LWL koppelbar ist (vgl. z.B. DE-A-28 46 852).

Derartige bekannte Anordnungen werden insbesondere auch zur Prüfung der Fertigungsqualität von LWL-Kabeln benötigt. In der Druckschrift CAT.NO. MN936/937-1, "Optical Channel Selector" der Firma Anritsu Corp., Japan, Juni 1986, ist ein für optische Meßgeräte vorgesehener Wahlschalter beschrieben, an welchen sechs verschiedene LWL anschließbar und wahlweise mit einem Ausgangsanschluß koppelbar sind, welcher mit einem optischen Meßgerät (Messung der Dämpfung oder der Übertragungsbandbreite) zu koppeln ist.

Zur Kopplung müssen lösbare optische Anschlußmöglichkeiten vorgesehen sein, welche eine genaue und reproduzierbare geometrische Ausrichtung der Stirnflächen der zu prüfenden LWL erlauben.

Wenn eine Meßanordnung der eingangs genannten Art zur Qualitätsprüfung bei der Fertigung von optischen Kabeln verwendet werden soll, muß eine Vielzahl von sich fortlaufend wiederholenden Ankoppelvorgängen durchgeführt werden. Dabei können die empfindlichen optischen Anschlußelemente vorzeitig verschleißen, oder auch durch nicht ausschließbare unsachgemäße Behandlung oder durch Verschmutzung beschädigt werden, so daß undefiniert erhöhte Einfügungsdämpfungen entstehen.

Reparaturarbeiten an hochwertigen optischen Meßgeräten sind aufwendig und zeitraubend.

Der Erfindung liegt die Aufgabe zugrunde, die Anordnung der eingangs genannten Art derart zu gestalten, daß sie auch bei geringeren Anforderungen an Bedienungssorgfalt zuverlässig und einfach handhabbar ist.

Die Lösung gelingt dadurch, daß Meßgerät und Wahlschalter integrierte Bestandteile eines einheitlichen Prüfgerätes sind.

Dabei ist der Wahlschalter als Bestandteil des Prüfgeräts geschützt, so daß nur noch die Ankoppelstellen für die zu messenden LWL nach außen zugänglich und beeinträchtigenden Einwirkungen ausgesetzt sind.

Gemäß einer vorteilhaften Weiterbildung der Erfindung ist vorgesehen, daß die optischen Eingänge des Wahlschalters mit inneren optischen Anschlußelementen eines insbesondere einen Teil des Prüfgerätes bildenden Koppelelements verbunden sind, und daß die inneren Anschlußelemente optisch leitend mit äußeren Anschlußelementen verbunden sind, an welche die LWL ankoppelbar sind.

Das Koppelelement, dessen äußeren Anschlußelemente gefährdet und verschleißempfindlich sind, kann separat ausgewechselt werden. Dieser Vorgang ist auch von nicht speziell ausgebildeten Benutzern einfach durchzuführen. Eine Reparatur der verschleißempfindlichen Teile oder deren Funktionsüberprüfung ist ohne großen Aufwand möglich.

Gemäß einer bevorzugten Ausführungsform ist vorgesehen, daß die LWL in einen gemeinsamen Anschlußblock derart eingelegt sind, daß ihre Stirnflächen im Raster der äußeren Anschlußelemente des Koppelelements ausgerichtet sind, und daß der Anschlußblock in einer solchen Position mit dem Prüfgerät verbindbar ist, daß die LWL optisch mit den äußeren Anschlußelementen verbunden sind. Die aus einem Kabel herausragenden LWL-Enden können dann an einem beliebigen Ort in den Anschlußblock in jeweils vorbestimmter Position eingelegt und fixiert werden. Der Anschluß an die Meßanordnung erfolgt dann durch einen einzigen einfachen Koppelvorgang.

Die Positionierung der LWL im Anschlußblock ist besonders einfach, ohne daß eine außergewöhnliche Präzision gewährleistet werden muß, wenn die Stirnflächen der LWL den Stirnflächen der lichtleitenden Elemente der äußeren Anschlußelemente in gekoppeltem Zustand im Abstand von 100 bis 800 $\mu$m gegenüberliegen. Wegen des Abstandes der Stirnflächen der zu koppelnden lichtleitenden Elemente entstehen zwar erhöhte Einfügungsverluste, jedoch sind diese selbst bei relativ großem Mittenversatz der Stirnflächen nahezu unverändert konstant. Die Reproduzierbarkeit der Kopplungsgüte ist dabei trotz relativ hoher geometrischer Toleranzen hervorragend. Intensitätsverluste des übertragenen Lichts können, sofern sie stets in gleichbleibendem Ausmaß entstehen, in Kauf genommen werden, da verfügbare Meßgeräte hinreichend empfindlich sind. Die beschriebene Ankopplung mit bewußt großem Abstand der zu koppelnden LWL-Stirnflächen ist besonders geeignet für Messungen im Durchlichtverfahren, bei welchem Lichtsender und Lichtempfänger an verschiedenen Enden eines zu messenden LWL angeordnet sind.

Wenn dagegen mit einem Rückstreuverfahren (OTDR) gemessen werden soll, wird bevorzugt, daß die optischen Eingänge des Wahlschalters mit LWL-Enden verbunden sind, die in V-Nuten eines Koppelblocks gelegt sind, und daß die zu messenden LWL gegenüberliegend in die V-Nuten des Koppelblocks eingelegt und mittels eines die LWL haltenden Klemmblocks in Richtung auf die Stirnflächen der LWL-Enden bewegbar sind. Beim Rückstreuverfahren ist weniger die Reproduzierbarkeit der Lichtübertragung durch die Koppelstellen, sondern eine möglichst kleine Einfügungsdämpfung wichtig.

Die Vielseitigkeit der erfindungsgemäßen Meßanordnung wird dadurch vergrößert, daß das Prüfgerät mehrere verschiedenartige Meßgeräte enthält, deren optische Eingänge wahlweise mit jedem der LWL koppelbar sind. Wenn mehrere der Meßgeräte bei einer Stellung des Wahlschalters mit verschiedenen LWL gekoppelt sind, können gleichzeitig verschiedenartige Meßvorgänge, natürlich an verschiedenen LWL, durchgeführt werden.

Die Erfindung wird anhand eines in der Zeichnung prinzipiell dargestellten Ausführungsbeispiels näher erläutert.

Fig. 1 zeigt schematisch die Zuordnung der für eine erfindungsgemäße Meßanordnung wesentlichen Bauelemente.

Fig. 2 zeigt in stark vergrößertem Maßstab die relative Lage eines anzukoppelnden LWL gegenüber einer optischen Eingangsleitung der Meßanordnung.

Fig. 3 zeigt schematisch eine abgewandelte Meßanordnung.

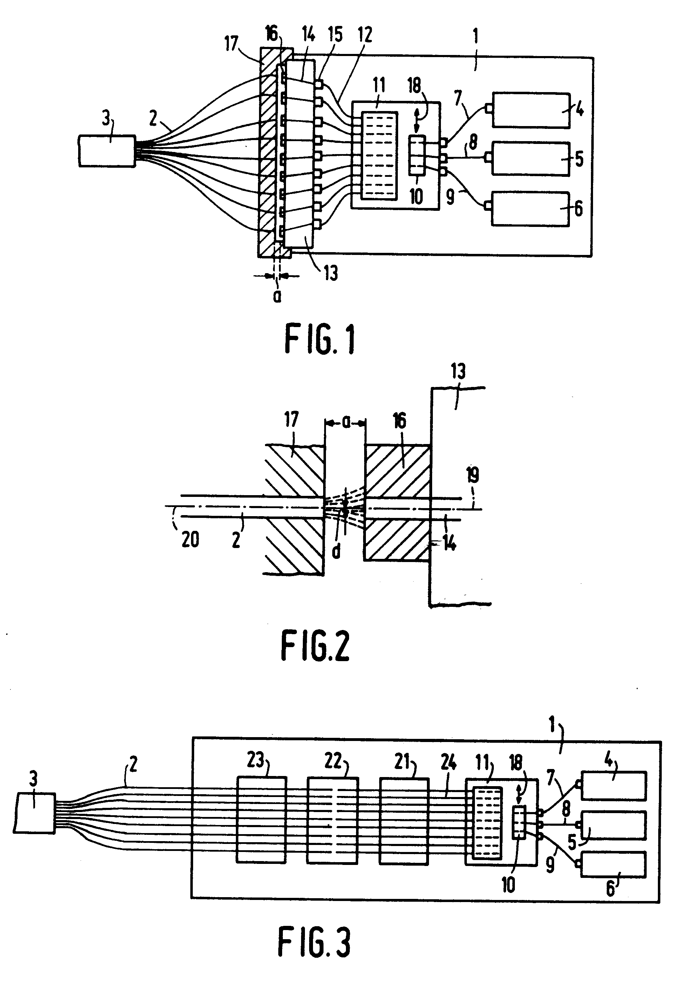

Mit einer in Fig. 1 prinzipartig angedeuteten Meßanordnung 1 sollen für neun LWL 2 eines optischen Kabels 3 Qualitätsprüfungen durchgeführt werden. Beispielsweise wird mit einem Meßgerät 4 eine Dämpfungsmessung bei einer ersten Licht-Wellenlänge, mit einem Meßgerät 5 eine Dämpfungsmessung bei einer zweiten Licht-Wellenlänge und mit einem Meßgerät 6 die Messung der Übertragungs-Bandbreite durchgeführt.

Die optischen Eingänge 7,8 und 9 dieser Meßgeräte sind lichtleitend mit einem beweglichen Wagen 10 eines Wahlschalters 1 verbunden. Dieser Wagen ist präzisederart in Richtung des Doppelpfeils 18 schrittweise verschiebbar, daß jeder der Eingänge 7,8 oder 9 zu jedem der neun Anschlußleitungen 12 des Wahlschalters 11 optisch leitend durchschaltbar ist.

Die LWL 2 werden nicht direkt mit den entsprechenden Anschlußleitungen 12 des Wahlschalters 11 verbunden, sondern über ein zwischengeschaltetes, dem Prüfgerät 1 zugeordnetes Koppelelement 13, in welchem neun Zwischenleitungen 14 an einer Seite mit je einer Anschlußleitung 12 fest aber lösbar verbunden sind, beispielsweise mittels einer Steckverbindung 15 üblicher Bauart. Die Zwischenleitungen 14 enden mit ihren Stirnflächen in Anschlußfassungen 16, vorzugsweise in einer gemeinsamen Ebene.

Die Enden der LWL 2 des optischen Kabels 3 sind derart in einen Anschlußblock 17 eingelegt und fixiert, daß ihre Stirnflächen jeweils einer zugeordneten Stirnfläche einer Zwischenleitung 14 mit jeweils möglichst gleichem Abstand konzentrisch gegenüberliegen.

Der Anschlußblock 17 ist derart an das Prüfgerät 1 bis zu einem Anschlag angelegt, daß sich ein Abstand a zwischen den Stirnflächen der LWL 2 und der Zwischenleitungen 14 ergibt.

Bei einer Beschädigung oder Verschmutzung der Stirnflächen oder Anschlußfassungen 16 kann das gesamte Koppelelement 13 leicht ausgewechselt werden. Die optischen Anschlüsse des Wahlschalters 11 sind innerhalb des Prüfgeräts 1 geschützt und gegen Beschädigungen gesichert.

In Fig. 1 ist wegen der einfacheren Darstellbarkeit ein Wahlschalter mit linear beweglichem Scanner-Wagen 10 gezeichnet. Vorteilhaft wäre jedoch auch eine Gestaltung als Drehschalter (vgl. DE-OS 34 39 905), bei welchem die zu scannenden optischen Leitungen äquidistant auf einen Kreis oder auf koaxialen Kreisen angeordnet sind.

In Fig. 2 ist die räumliche Zuordnung der Stirnflächen eines LWL 2 und einer zugeordneten Zwischenleitung 14 in der Ankoppellage vergrößert erkennbar. Von dem aus dem LWL sich entsprechend der gestrichelten Linien erweiternd austretenden optischen Strahl gelangt nur ein Teil seiner Lichtleistung in die Zwischenleitung 14. Dieser Lichtanteil ist jedoch auch bei einem gewissen Versatz d der optischen Achsen 18 und 19 des LWL 2 bzw. der Zwischenleitung 14 praktisch unverändert. Darüberhinaus darf ein relativ großer Winkelversatz der Achsen 18 und 19 zugelassen werden. Je größer der Abstand a gewählt ist, desto unempfindlicher reagiert die Meßanordnung 1 auf Ausrichtungsfehler der LWL 2. Der Abstand a sollte jedoch nicht zu groß gewählt werden, damit keine unnötig hohen Einkoppelverluste entstehen. Als vorteilhaft haben sich Werte a im Bereich zwischen 100 und 800 $\mu$m erwiesen.

Bei der Gestaltung der in Fig. 1 dargestellten Meßanordnung als sogenannter Kabelmeßautomat sind natürlich nicht dargestellte Elemente wie insbesondere elektronische Baugruppen und Ausgabe- oder Anzeigeeinheiten erforderlich. Diese können in einem Fachmann geläufiger Weise gestaltet sein. Auf deren Darstellung wurde verzichtet, um die für die Erfindung wesentlichen Merkmale klarer herausstellen zu können.

Bei der abgewandelten und für Messungen nach dem Rückstreuverfahren bevorzugten Meßanordnung nach Figur 3 sind gleiche Bauelemente wie bei der Anordnung nach Figur 1 mit gleichen Bezugsziffern bezeichnet. Die zum Wahlschalter 11 führenden LWL-Enden 20 sind in einem Klemmblock 21 fixiert und enden in durchgehenden V-Nuten des Koppelblocks 22. In jeder der V-Nuten liegt einem der LWL-Enden 20 einer der zu messenden LWL 2 gegenüber. Die Gruppe der LWL 2 ist im Klemmblock 23 festgelegt. Die Stirnflächen der LWL 2 werden danach durch entsprechende Verschiebung des Klemmblocks 23 an die Stirnflächen der LWL-Enden 20 gedrückt. Einzelheiten einer hierfür geeigneten Koppelvorrichtung sind beispielsweise in der DE-A 36 13 345 beschrieben.

**Patentansprüche**

1. Meßanordnung zur Prüfung einer Mehrzahl von Lichtwellenleitern LWL mittels eines optischen Meßgerätes, auf dessen optischen Meßeingang über einen optischen Wahlschalter aufeinanderfolgend jeweils einer der LWL koppelbar ist, dadurch gekennzeichnet, daß Meßgerät (4,5,6) und Wahlschalter (11) integrierte Bestandteile eines einheitlichen Prüfgerätes (1) sind.

2. Meßanordnung nach Anspruch 1, dadurch gekennzeichnet, daß die optischen Eingänge (12) des Wahlschalters (11) mit inneren optischen Anschlußelementen (15) eines insbesondere einen Teil des Prüfgerätes (1) bildenden Koppelelements (13) verbunden sind, und daß die inneren Anschlußelemente (15) optisch leitend mit äußeren Anschlußelementen (16) verbunden sind, an welche die LWL (2) ankoppelbar sind.

3. Meßanordnung nach Anspruch 1 oder 2, dadurch gekennzeichnet, daß die LWL 2 in einen gemeinsamen Anschlußblock (17) derart eingelegt sind, daß ihre Stirnflächen im Raster der äußeren Anschlußelemente (16) des Koppelelements (13) ausgerichtet sind, und daß der Anschlußblock (17) in einer solchen Position mit dem Prüfgerät (1) verbindbar ist, daß die LWL (2) optisch mit den äußeren Anschlußelementen (16) verbunden sind.

4. Meßanordnung nach Anspruch 3, dadurch gekennzeichnet, daß die Stirnflächen der LWL (2) den Stirnflächen der lichtleitenden Elemente (14) der äußeren Anschlußelemente (16) in gekoppeltem Zustand im Abstand von 100 bis 800 $\mu$m gegenüberliegen.

5. Meßanordnung nach Anspruch 1 oder 2, dadurch gekennzeichnet, daß die optischen Eingänge des Wahlschalters (11) mit LWL-Enden (20) verbunden sind, die in V-Nuten eines Koppelblocks (21) gelegt sind, und daß die zu messenden LWL (2) gegenüberliegend in die V-Nuten des Koppelblocks (22) eingelegt und mittels eines die LWL (2) haltenden Klemmblocks (23) in Richtung auf die Stirnflächen der LWL-Enden (20) bewegbar sind.

6. Meßanordnung nach einem der Ansprüche 1 bis 5, dadurch gekennzeichnet, daß das Prüfgerät (1) mehrere verschiedenartige Meßgeräte (4,5,6) enthält, deren optische Eingänge (7,8,9) wahlweise mit jedem der LWL (2) koppelbar sind.

7. Meßanordnung nach Anspruch 6, dadurch gekennzeichnet, daß mehrere der Meßgeräte (4,5,6) bei einer Stellung des Wahlschalters (11) mit verschiedenen LWL (2) gekoppelt sind.

**Claims**

1. A measuring arrangement for testing a plurality of optical wave guides by means of an optical measuring device having an optical measuring input to which each optical waveguide can be successively coupled via an optical selector, characterized in that measuring device (4, 5, 6) and selector (11) are integrated parts of a singular testing device (1).

2. A measuring arrangement as claimed in Claim 1, characterized in that the optical inputs (12) of the selector (11) are connected to inner optical connection elements (15) of a coupling element (13) particularly constituting a part of the testing device (1) and in that the inner connection elements (15) are connected in an optically conducting manner to exterior connection elements (16) adapted to be coupled to the optical waveguides (2).

3. A measuring arrangement as claimed in Claim 1 or 2, characterized in that the optical waveguides (2) are positioned in a common connection block (17) in such a way that their end faces are aligned in the grid of the exterior connection elements (16) of the coupling element (13) and in that the connection block (17) is connectable to the testing device (1) in such a position that the optical waveguides (2) are optically connected to the exterior connection elements (16).

4. A measuring arrangement as claimed in Claim 3, characterized in that the end faces of the optical waveguides (2) are located opposite the end faces of the light-conducting elements (14) of the exterior connection elements (16) in the coupled state over a distance of approximately 100 to 800 $\mu$m.

5. A measuring arrangement as claimed in Claim 1 or 2, characterized in that the optical inputs of the selector (11) are connected to optical waveguide ends (24) which are positioned in V grooves of a coupling block (21), and in that the optical waveguides (2) to be measured are positioned opposite these ends in the V grooves of the coupling block (22) and are movable in the direction of the end faces of the optical waveguide ends (24) by means of a clamping block (23) holding the optical waveguides (2).

6. A measuring arrangement as claimed in any one of Claims 1 to 5, characterized in that the testing device (1) comprises a plurality of different measuring devices (4, 5, 6) whose optical inputs (7, 8, 9) can be optionally coupled to each of the optical waveguides (2).

7. A measuring arrangement as claimed in Claim 6, characterized in that a plurality of measuring devices (4, 5, 6) is coupled to different optical waveguides (2) in a given position of the selector (11).

**Revendications**

1. Dispositif de mesure pour l'essai de plusieurs guides d'ondes lumineuses à l'aide d'un dispositif de mesure optique à l'entrée de mesure optique duquel peut être couplé chaque fois successivement l'un des guides d'ondes lumineuses par un commutateur de sélection, caractérisé en ce que l'appareil de mesure (4, 5, 6) et le commutateur de sélection (11) sont des composants intégrés d'un appareil d'essai uniforme (1).

2. Dispositif de mesure selon la revendication 1, caractérisé en ce que les entrées optiques (12) du commutateur de sélection (11) sont connectées à des éléments de connexion optique intérieurs (15) d'un élément de couplage (13) formant notamment une partie de l'appareil d'essai (1) et en ce que les éléments de connexion intérieurs (15) sont reliés d'une façon optiquement conductrice à des éléments de connexion extérieurs (16) auxquels peuvent être accouplés les guides d'ondes lumineuses (2).

3. Dispositif de mesure selon la revendication 1 ou 2, caractérisé en ce que les guides d'ondes lumineuses sont posés dans un bloc de connexion commun (17) de façon que leurs faces terminales soient alignées à la configuration des éléments de connexion extérieurs (16) de l'élément de couplage (13) et en ce que le bloc de connexion (17) peut être connecté à l'appareil d'essai (1) dans une telle position que les guides d'ondes lumineuses (2) sont optiquement reliés aux éléments de connexion extérieurs (16).

4. Dispositif de mesure selon la revendication 3, caractérisé en ce qu'à l'état couplé, les faces terminales des guides d'ondes lumineuses (2) sont situées, à espacement de 100 à 800 $\mu$m, en face des faces terminales des éléments conducteurs (14) des éléments de connexion extérieurs (16).

5. Dispositif de mesure selon la revendication 1 ou 2, caractérisé en ce que les entrées optiques du commutateur de sélection (11) sont reliées à des extrémités de guides d'ondes lumineuses (20) qui sont posés dans des rainures en V d'un bloc de couplage (21) et en ce que les guides d'ondes lumineuses à mesurer (2) sont posés en face dans les rainures en V du bloc de couplage (22) et peuvent être déplacés à l'aide d'un bloc de serrage (23) maintenant les guides d'ondes lumineuses (2) dans la direction des faces terminales des extrémités de guides d'ondes lumineuses (20).

6. Dispositif de mesure selon l'une des revendications 1 à 5, caractérisé en ce que l'appareil d'essai (1) comporte plusieurs appareils de mesure de caractère différent (4, 5, 6) dont les entrées optiques (7, 8, 9) peuvent être couplées au besoin à chacun des guides d'ondes lumineuses (2).

7. Dispositif de mesure selon la revendication 6, caractérisé en ce que plusieurs des appareils de mesure (4, 5, 6) sont couplés à des guides d'ondes lumineuses différents (2) dans une position du commutateur de sélection (11).

FIG.1

FIG.2

FIG.3